# EUROPÄISCHE PATENTSCHRIFT

(11) **EP 3 500 787 B1**
(45) Veröffentlichungstag und Bekanntmachung des Hinweises auf die Patenterteilung: **22.07.2020**
(21) Anmeldenummer: 17757510.7
(22) Anmeldetag: 18.08.2017
(51) Int. Cl.: F16L 21/08

(54) **SICHERUNGSKRALLE**
CLAWED SECURING MEANS
GRIFFE DE SÉCURITÉ

(30) Priorität: 22.08.2016 DE 102016115520
(43) Veröffentlichungstag der Anmeldung: 26.06.2019
(73) Patentinhaber: NORMA Germany GmbH, 63477 Maintal (DE)
(72) Erfinder: KRÄMER, Markus, 63533 Mainhausen (DE)
(74) Vertreter: Patentanwälte Olbricht Buchhold Keulertz
(86) Internationale Anmeldenummer: PCT/EP2017/070973
(87) Internationale Veröffentlichungsnummer: WO 2018/036936

(56) Entgegenhaltungen:
- EP-A1- 1 245 889
- FR-A1- 2 920 496
- US-A1- 2005 189 768

## Beschreibung

Die Erfindung betrifft eine Sicherungskralle gemäß dem Oberbegriff von Anspruch 1.

Sicherungskrallen mit radial nach innen gerichteten Kralleneinlagen werden insbesondere zur axialen Zugsicherung von muffenlosen Rohren, beispielweise aus Gusseisen, eingesetzt, die mit handelsüblichen Verbindern gemäß EN 877 verbunden werden. Eine solche Sicherungskralle ist beispielweise in EP 1 245 889 B1 gezeigt.

Auch aus der FR 2 920 496 A1 ist eine Sicherungskralle mit einem Band bekannt, das zwei Hälften aufweist, die an ihren Enden jeweils eine Spannbacke aufweisen. Die gegenüberliegenden Spannbacken der zwei Hälften sind jeweils über mindestens ein Spannelement miteinander verbunden. Auf einer radial inneren Fläche, an axialen Rändern der Hälften ist je eine im Wesentlichen teilkreisförmige Kralleneinlage angeordnet, die mehrere in Umfangsrichtung nebeneinander angeordnete Krallen aufweist, wobei die Kralleneinlagen an ihren Enden jeweils einen Endbereich aufweisen, der radial nach außen abgewinkelt ist, wobei der Endbereich benachbart zu der jeweiligen Spannbacke der gleichen Hälfte angeordnet ist.

Häufig bestehen Sicherungskrallen aus zwei Hälften, die an ihren Enden Spannbacken aufweisen. Die jeweils gegenüberliegenden Spannbacken der beiden Hälften werden mit Hilfe von Spannelementen zueinander befestigt und verspannt. Die Kralleneinlagen werden an den äußeren Rändern der Hälften verschweißt.

Durch das Verschweißen der Kralleneinlagen mit der jeweiligen Hälfte, können nicht alle Materialien flexibel miteinander kombiniert werden. Zudem tritt vermehrt eine interkristalline Korrosion an den Schweißstellen auf. Dadurch können solche Sicherungskrallen hohen Anforderungen, insbesondere hinsichtlich der Korrosionsbeständigkeit, nicht immer gerecht werden.

Zusätzlich sind diese Sicherungskrallen mit verschweißten Kralleneinlagen ausschließlich für den Einsatz bei einer vorher bestimmten Rohrgröße geeignet. Fertigungstoleranzen oder Temperaturschwankungen, die zu einem Ausdehnen oder Zusammenziehen der verbundenen Rohre führen, können bereits die axiale Zugfestigkeit der Verbindung vermindern.

Zudem werden das Material und die Form der Kralleneinlage durch das Verschweißen einmalig festgelegt und es kann nicht flexibel auf spezielle Anforderungen, beispielweise bezüglich der Materialwahl der Kralleneinlage, eingegangen werden. Auch ist das Verschweißen der Kralleneinlage mit zusätzlichen Arbeitsschritten und Kosten bei der Herstellung derartiger Sicherungskrallen verbunden.

Aufgabe der Erfindung es daher, die Nachteile des Standes der Technik zu beseitigen und eine Sicherungskralle bereitzustellen, die einfach und kostengünstig herzustellen ist. Ferner soll die Korrosionsbeständigkeit der Sicherungskralle verbessert werden.

Zudem soll eine Herstellung von Sicherungskrallen mit Kralleneinlagen ermöglicht werden, in der flexibel auf unterschiedliche Anforderungen, insbesondere Materialanforderungen und unterschiedliche Rohrdurchmesser, reagiert werden kann.

Die Merkmale der Erfindung sind im Anspruch 1 angegeben. Ausgestaltungen sind Gegenstand der Ansprüche 2 bis 9.

Bei einer Sicherungskralle mit einem Band, das zwei Hälften aufweist, die an ihren Enden jeweils eine Spannbacke aufweisen, wobei gegenüberliegende Spannbacken der zwei Hälften jeweils über mindestens ein Spannelement miteinander verbunden sind, und wobei auf einer radial inneren Fläche an axialen Rändern der Hälften je mindestens eine im Wesentlichen teilkreisförmige Kralleneinlage angeordnet ist, die mehrere in Umfangsrichtung nebeneinander angeordnete Krallen aufweist, ist erfindungsgemäß vorgesehen, dass die Kralleneinlagen an ihren Enden jeweils einen Endbereich aufweisen, der radial nach außen abgewinkelt ist, wobei der Endbereich benachbart zu der jeweiligen Spannbacke der gleichen Hälfte angeordnet ist.

Der erfindungsgemäße Aufbau ermöglicht, dass die Kralleneinlage nicht mit der Sicherungskralle verschweißt werden muss, sondern lediglich aufgrund ihrer Form in Position gehalten wird. Dieses wird durch eine materialbedingte Vorspannung der Kralleneinlage unterstützt. Durch den Verzicht auf eine stoffschlüssige Verbindung in Form einer Schweißverbindung zwischen der Kralleneinlage und der Hälfte, können die Materialien dieser Bauteile flexibel gewählt werden. Zudem kann eine dauerhafte Korrosionsbeständigkeit der Sicherungskralle gewährleistet werden.

Zusätzlich werden die Herstellungskosten reduziert, da auf das Verschweißen und somit einen zusätzlichen Arbeitsschritt verzichtet werden kann. Weiterhin kann flexibel auf unterschiedliche Rohrgrößen eingegangen und geringe Schwankungen im Rohrdurchmesser durch Wahl einer entsprechenden Kralleneinlage ausgeglichen werden.

Der Endbereich der Kralleneinlage weist bevorzugt keine Krallen auf, sondern besteht aus einer im Wesentlichen ebenen Fläche. Dieses ermöglicht einen einfachen Einbau der Kralleneinlage in die Hälften und eine flächige Anlage der Endbereiche an die Spannbacken. Die Krallen der Kralleneinlage sind insbesondere radial nach innen gerichtet, vorzugsweise weisen die Krallen einen rechten Winkel zur Hälfte auf. Dadurch kann eine axial zugfeste Verbindung zweier Rohre gewährleistet werden.

Erfindungsgemäß weist der Endbereich einer Kralleneinlage eine Öffnung auf, die zum Durchführen des mindestens einen Spannelements ausgebildet ist. Dadurch kann die Kralleneinlage relativ zu den Hälften mit Hilfe der Spannelemente befestigt werden. Durch diese Ausgestaltung müssen keine weiteren Befestigungselemente vorgesehen werden, da eine Befestigung mittels der bereits zum Verspannen der Hälften vorgesehenen Spannelemente erfolgt. Hierdurch werden die Herstellungskosten reduziert.

Vorzugsweise weist jedes Spannbackenpaar, welches aus zwei gegenüberliegenden Spannbacken der zwei Hälften besteht, zwei Spannelemente auf. Dadurch ist ein möglichst gleichmäßiges Verspannen der Sicherungskralle und Befestigen der Rohre zueinander möglich. Beispielweise sind die Spannelemente in Form von Schrauben, mit einem Schraubkopf und einem Gewinde, ausgebildet.

In einer bevorzugten Fortbildung weist der Endbereich der Kralleneinlage und/oder die benachbarte Spannbacke ein Innengewinde auf. Dieses Innengewinde ist bevorzugt in der Hälfte angeordnet, die einem Schraubkopf gegenüber liegt.

In einer bevorzugten Ausgestaltung liegt der Endbereich der Kralleneinlage an der jeweiligen Spannbacke derselben Hälfte an. Dieses führt zu einer flächigen Anlage der beiden Bauteile aneinander. Diese Bauweise ermöglicht eine optimale Befestigung der Kralleneinlagen durch die Spannelemente. Auch können die Sicherungskrallen mit den Kralleneinlagen bereits vollständig vormontiert werden, was die Montage vor Ort vereinfacht. Weiterhin gewährleistet das Anliegen des Endbereichs der Kralleneinlage an der Spannbacke, dass die Kralleneinlage korrekt in der Hälfte positioniert wird.

Vorzugsweise ist der Endbereich der Kralleneinlage durch einen Schlitz im Band geführt, wobei der Endbereich der Kralleneinlage benachbart zu einer Fläche der Spannbacke angeordnet ist, die der gegenüberliegenden Spannbacke abgewandt ist. Dadurch kann die Kralleneinlage bereits in die einzelne Hälfte positioniert und formschlüssig gehalten werden, bevor diese mit der zweiten Hälfte verbunden wird. Zudem gewährleistet diese Ausgestaltung eine korrekte Positionierung der Kralleneinlage in der Hälfte. Die Vormontage wird vereinfacht und die Herstellungskosten somit reduziert.

Die vorgenannten Schlitze sind bevorzugt jeweils am Ende der Hälften und in Nachbarschaft, aber mit Abstand, zu den Spannbacken angeordnet. In einer bevorzugten Ausgestaltung weist jedes Ende einer Hälfte zwei Schlitze zum Durchführen zweier, an den jeweiligen axialen Rändern einer Hälfte angeordneter, Kralleneinlagen auf. Je Schlitz ist ein Endbereich einer Kralleneinlage radial nach außen geführt.

In einer bevorzugten Ausgestaltung sind die Schlitze breiter als der Endbereich der jeweiligen Kralleneinlage ausgeführt. Dieses ermöglicht, dass Kralleneinlagen in den Hälften einfach und kostengünstig montiert werden können.

In einer bevorzugten Fortbildung weist die Kralleneinlage mindestens ein Zwischensegment auf, welches durch einen Freiraum in der Hälfte radial nach außen vorsteht. Dieses stellt eine zusätzliche Positionierungshilfe der Kralleneinlage zu der entsprechenden Hälfte dar. Zusätzlich kann dadurch eine Flexibilität der Kralleneinlage erzielt werden, so dass geringe Durchmesservarianzen der zu verbindenden Rohre, beispielweise aufgrund von Temperaturschwankungen, ausgeglichen werden können und keinen Einfluss auf die axiale Zugfestigkeit der Verbindung haben.

Vorzugsweise ist das Zwischensegment aus der Kralleneinlage ausgeformt. Dadurch wird die Herstellung der Sicherungskralle vereinfacht und es sind keine zusätzlichen Arbeitsschritte in Form eines Verschweißens notwendig. Der Bereich der Kralleneinlage, der zum Zwischensegment ausgeformt wird, weist bevorzugt keine Krallen auf. Weiterhin wird das Zwischensegment bevorzugt derart ausgeformt, dass es als eine Art Schlaufe aus dem Freiraum in der Hälfte herausragt. Diese Ausgestaltung ermöglicht eine einfache Herstellung der Sicherungskralle mit Kralleneinlage, wobei eine korrekte Positionierung der Kralleneinlage insbesondere durch das Zwischensegment gewährleistet wird. Zudem ermöglicht die Form des Zwischensegments, dass die Kralleneinlage in der Hälfte in radialer Richtung Spiel aufweist, wodurch Größenschwankungen der Rohre ausgeglichen werden können.

In einer bevorzugten Ausführungsform ist vorgesehen, dass die Zwischensegmente zweier Kralleneinlagen, an gegenüberliegenden axialen Rändern einer Hälfte, in Umfangsrichtung parallel zueinander ausgerichtet sind. Dieses deckt sich damit, dass die Zwischensegmente der gegenüberliegenden Kralleneinlagen einer Hälfte eine gemeinsame Achse in Axialrichtung der Sicherungskralle aufweisen. Insbesondere ist das Zwischensegment der jeweiligen Kralleneinlage und der Freiraum in der jeweiligen Hälfte in Umfangsrichtung mittig zwischen den beiden Enden und somit Spannbacken einer Hälfte angeordnet. Zudem ist der jeweilige Freiraum in einer Hälfte bevorzugt im Bereich der axialen Ränder angeordnet. Diese Ausgestaltung ist einfach und kostengünstig herzustellen. Zusätzlich dazu werden die auf die Kralleneinlage wirkenden Kräfte durch diese Ausgestaltung gleichmäßig auf die Kralleneinlage verteilt

In einer alternativen Ausgestaltung sind das Zwischensegment der jeweiligen Kralleneinlage und der Freiraum in der jeweiligen Hälfte in Umfangsrichtung zu einem der beiden Endbereiche versetzt angeordnet. Hierdurch kann beispielweise eine nicht gleichmäßige Beanspruchung der Sicherungskralle ausgeglichen und einem Kräfteungleichgewicht entgegen gewirkt werden.

Vorzugsweise weist der Freiraum in den Hälften, durch den das Zwischensegment radial nach außen vorsteht, eine dem Zwischensegment entsprechende Form auf. Durch eine Wechselwirkung des Zwischensegments mit dem Freiraum, bedingt durch eine einheitliche, aufeinander abgestimmte Form, wird die Kralleneinlage in einer vordefinierten Position fixiert, so dass die Kralleneinlage gegen Verrutschen in Radial- und Axialrichtung gesichert ist. Beispielweise können das Zwischensegment und der Freiraum eine im Wesentlichen rechteckige Form aufweisen. Beispielweise in der Ausgestaltungsvariante, in der das Zwischensegment als Art Schlaufe ausgebildet ist, bezieht sich die einheitliche Form des Freiraums und des Zwischensegments auf den Bereich des Zwischensegments, der durch den Freiraum radial nach außen ragt. Vorzugsweise ist der Freiraum 1 bis 10 %, insbesondere 1 bis 5 %, größer als die äußere Form des Zwischensegments ausgestaltet. Dadurch wird eine einfache Herstellung und Montage ermöglicht bei gleichzeitiger Sicherung der korrekten Positionierung der jeweiligen Kralleneinlage.

In einer bevorzugten Ausgestaltung weist die Kralleneinlage zwei in Axialrichtung parallel zueinander angeordnete Reihen auf, die jeweils mehrere in Umfangsrichtung nebeneinander angeordnete Krallen umfassen. Die Krallen der zwei parallel zueinander angeordneten Reihen einer Kralleneinlage können dabei in Umfangsrichtung an gleicher Position oder versetzt zueinander angeordnet sein.

Vorzugsweise sind die axialen Ränder der Hälften radial nach innen gebogen, wobei die Kralleneinlagen im Bereich einer Biegekante der Ränder an der radial inneren Fläche der Hälften anliegen. Dieser Anlagebereich stabilisiert die Kralleneinlagen und verbessert somit die axial zugfeste Verbindung zweier Rohre. Zudem wird die Kralleneinlage auch ohne Verschweißen mit der Hälfte sicher gehalten, wodurch die Materialien der Kralleneinlage und der Hälfte flexibler gewählt werden können und auch keine vermehrte Korrosion beispielweise an der Schweißnaht auftreten kann. Insbesondere stehen die Krallen der Kralleneinlagen radial weiter vor als die axialen Ränder. Dadurch wird gewährleistet, dass die Krallen eine zugfeste Verbindung ermöglichen.

In einer bevorzugten Ausgestaltung liegen die Kralleneinlagen zumindest teilweise am radial nach innen gebogenen Rand der Hälfte an. Dieses sorgt für eine optimale Stabilisierung der Kralleneinlagen in der jeweiligen Hälfte.

Der radial nach innen geformte Rand endet vorzugsweise vor der jeweiligen Spannbacke und dem dazugehörigen Schlitz. Dadurch wird die Funktion der Spannbacke und des Schlitzes nicht beeinträchtigt.

In einer bevorzugten Ausgestaltung weist zumindest eine Hälfte mindestens eine Aussparung auf. Diese Aussparungen sind insbesondere länger in Umfangsrichtung als in Radialrichtung der jeweiligen Hälfte ausgeformt. Durch die Aussparungen kann eine Reduktion des Materials der Sicherungskralle und somit eine Kostenreduktion erzielt werden. Zusätzlich können Verbinder zum dichten Verbinden der Rohrenden in diesen Aussparungen eingehakt und somit vorpositioniert werden.

Vorzugsweise weisen die Hälften Verstärkungen auf, die auf der Außenseite der jeweiligen Hälfte angebracht sind. Diese Verstärkungen sind insbesondere im Endbereich der Hälften angeordnet. Dadurch kann eine zusätzliche Stabilisierung der Sicherungskralle erzielt werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigt:

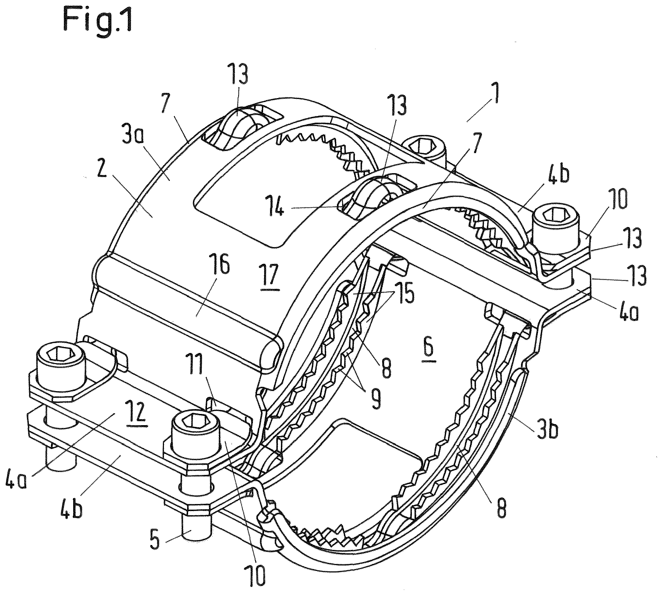

Fig. 1 Schematische Darstellung einer erfindungsgemäßen Sicherungskralle

Fig. 1 zeigt eine Ausführungsform einer erfindungsgemäßen Sicherungskralle 1 mit einem Band 2, das zwei Hälften 3a, 3b aufweist. Jede Hälfte 3a, 3b weist an ihren Enden jeweils eine Spannbacke 4a, 4b auf, wobei sich gegenüberliegende Spannbacken 4a, 4b der zwei Hälften 3a, 3b jeweils über mindestens ein Spannelement 5 miteinander verbunden sind. In dieser Ausführungsform sind jeweils gegenüberliegende Spannbacken 4a, 4b mit zwei Spannelementen 5 in Form von Schrauben verbunden. Auf einer radial inneren Fläche 6, an den axialen Rändern 7 der Hälften 3a, 3b sind jeweils im Wesentlichen teilkreisförmige Kralleneinlagen 8 angeordnet, die mehrere in Umfangsrichtung nebeneinander angeordnete Krallen 9 aufweisen. Die Kralleneinlagen 8 weisen an ihren Enden jeweils einen Endbereich 10 auf, der radial nach außen abgewinkelt und benachbart zur jeweiligen Spannbacke 4a, 4b der gleichen Hälfte 3a, 3b angeordnet ist. Der Endbereich 10 der Kralleneinlage 8 liegt beispielweise an der entsprechenden Spannbacke 4a, 4b derselben Hälfte 3a, 3b an.

Nach der Erfindung ist der Endbereich 10 einer Kralleneinlage 11 mit einer Öffnung versehen, so dass ein Spannelement 5 durchgeführt werden kann. Hierdurch erfolgt eine dauerhafte Sicherung der Kralleneinlage 8 zu der entsprechenden Hälfte 3a, 3b.

Der Endbereich 10 der jeweiligen Kralleneinlage 8 ist durch einen Schlitz 11 im Band 2 geführt, wodurch der Endbereich 10 der Kralleneinlage benachbart zu einer Fläche 12 der Spannbacke 4a, 4b angeordnet ist, die von der gegenüberliegenden Spannbacke 4 abgewandt ist. Zwei gegenüberliegende Spannbacken 4a, 4b einer Hälfte 3a, 3b bilden ein Spannbackenpaar 13, welches über ein Spannelement 5 miteinander verbunden wird.

Die Kralleneinlage 8 weist ein Zwischensegment 13 auf, welches durch einen Freiraum 14 radial nach außen vorsteht. Das Zwischensegment 13 ist aus der Kralleneinlage 8 in Form einer Schlaufe ausgeformt und weist keine Krallen 9 auf. Zudem weisen das Zwischensegment 13 und der Freiraum 14 eine aufeinander angepasste Form auf, wodurch eine optimale Positionierung der Kralleneinlage 8 in der jeweiligen Hälfte 3a, 3b gewährleistet werden kann. Die zwei Kralleneinlagen 8 an den axialen Rändern 7 einer Hälfte 3a, 3b sind derart ausgebildet, dass die Zwischensegmente 13 und Freiräume 14 auf einer Höhe in Umfangsrichtung der Sicherungskralle 1 liegen.

Die Kralleneinlagen 8 können aus einer Reihe 15 in Umfangsrichtung nebeneinander angeordneter Krallen 9 bestehen. Dabei können auch mehrere, insbesondere zwei, in Axialrichtung benachbarte, zueinander parallele Reihen 15 mit Krallen 8 vorgesehen sein.

Die axialen Ränder 7 der Hälften 3a, 3b sind derart radial nach innen gebogen, dass die Kralleneinlagen 8 zumindest teilweise an den Rändern 7 anliegen. Zudem können Verstärkungen 16 auf einer Außenseite 17 der Hälften 3a, 3b angeordnet sein. Diese stabilisieren die Sicherungskralle 1 zusätzlich.

Die Erfindung ist nicht auf eine der vorbeschriebenen Ausführungsformen beschränkt, sondern in vielfältiger Weise nach den Ansprüchen abwandelbar.

### Bezugszeichenliste

- 1: Sicherungskralle
- 2: Band
- 3a: Hälfte
- 3b: Hälfte
- 4a: Spannbacke
- 4b: Spannbacke
- 5: Spannelement
- 6: Radial innere Fläche der Hälfte 3a, 3b
- 7: Axiale Ränder der Hälfte 3a, 3b
- 8: Kralleneinlagen
- 9: Krallen
- 10: Endbereich der Kralleneinlage 8
- 11: Schlitz
- 12: Fläche der Spannbacke 4a, 4b
- 13: Zwischensegment
- 14: Freiraum
- 15: Reihe
- 16: Verstärkung
- 17: Außenseite der Hälfte 3a, 3b

## Patentansprüche

1. Sicherungskralle (1) mit einem Band (2), das zwei Hälften (3a, 3b) aufweist, die an ihren Enden jeweils eine Spannbacke (4a, 4b) aufweisen, wobei gegenüberliegende Spannbacken (4a, 4b) der zwei Hälften (3a, 3b) jeweils über mindestens ein Spannelement (5) miteinander verbunden sind, und wobei auf einer radial inneren Fläche (6), an axialen Rändern (7) der Hälften (3a, 3b) je mindestens eine im Wesentlichen teilkreisförmige Kralleneinlage (8) angeordnet ist, die mehrere in Umfangsrichtung nebeneinander angeordnete Krallen (9) aufweist, wobei die Kralleneinlagen (8) an ihren Enden jeweils einen Endbereich (10) aufweisen, der radial nach außen abgewinkelt ist, wobei der Endbereich (10) benachbart zu der jeweiligen Spannbacke (4a, 4b) der gleichen Hälfte angeordnet ist, **dadurch gekennzeichnet, dass** der Endbereich (10) der Kralleneinlage (8) eine Öffnung aufweist, die zum Durchführen des mindestens einen Spannelements (5) ausgebildet ist.

2. Sicherungskralle (1) nach Anspruch 1, **dadurch gekennzeichnet, dass** der Endbereich (10) der Kralleneinlage (8) an der jeweiligen Spannbacke (4a, 4b) derselben Hälfte (3a, 3b) anliegt.

3. Sicherungskralle (1) nach einem der vorangegangenen Ansprüche, **dadurch gekennzeichnet, dass** der Endbereich (10) der Kralleneinlage (8) durch einen Schlitz (11) im Band geführt ist, wobei der Endbereich (10) der Kralleneinlage (8) benachbart zu einer Fläche (12) der Spannbacke (4a, 4b) angeordnet ist, die der gegenüberliegenden Spannbacke (4a, 4b) abgewandt ist.

4. Sicherungskralle (1) nach einem der vorangegangenen Ansprüche, **dadurch gekennzeichnet, dass** die Kralleneinlage (8) mindestens ein Zwischensegment (13) aufweist, welches durch einen Freiraum (14) in der Hälfte (3a, 3b) radial nach außen vorsteht.

5. Sicherungskralle (1) nach Anspruch 4, **dadurch gekennzeichnet, dass** das Zwischensegment (13) aus der Kralleneinlage (8) ausgeformt ist.

6. Sicherungskralle (1) nach einem der Ansprüche 4 oder 5, **dadurch gekennzeichnet, dass** das die Zwischensegmente (13) zweier Kralleneinlagen (8), an gegenüberliegenden axialen Rändern (7) einer Hälfte (3a, 3b), parallel zueinander ausgerichtet sind.

7. Sicherungskralle (1) nach einem der Ansprüche 4 bis 6, **dadurch gekennzeichnet, dass** der Freiraum (14) in der Hälfte (3a, 3b) durch den das Zwischensegment (13) radial nach außen vorsteht, eine dem Zwischensegment (13) entsprechende Form aufweist.

8. Sicherungskralle (1) nach einem der vorangegangenen Ansprüche, **dadurch gekennzeichnet, dass** die Kralleneinlage (8) zwei in Axialrichtung parallel zueinander angeordnete Reihen (15) aufweist, die jeweils mehrere in Umfangsrichtung nebeneinander angeordnete Krallen (9) umfassen.

9. Sicherungskralle (1) nach einem der vorangegangenen Ansprüche, **dadurch gekennzeichnet, dass** die axialen Ränder (7) der Hälften (3a, 3b) radial nach innen gebogen sind, wobei die Kralleneinlagen (8) im Bereich einer Biegekante der Ränder (7) an der radial inneren Fläche (6) der Hälften (3a, 3b) anliegen.

## Claims

1. Clawed securing means (1) having a strap (2) which has two halves (3a, 3b) which have at their ends respectively one clamping jaw (4a, 4b), wherein oppositely-situated clamping jaws (4a, 4b) of the two halves (3a, 3b) are connected in each case via at least one clamping element (5), and wherein on a radially inner surface (6), on axial edges (7) of the halves (3a, 3b) is arranged in each case at least one substantially semicircular claw insert (8) which has several claws (9) arranged next to one another in circumferential direction, wherein the claw inserts (8) have at their ends in each case one end region (10) which is angled radially to the outside, wherein the edge region (10) is arranged adjacent to the respective clamping jaw (4a, 4b) of the same half, **characterised in that** the end region (10) of the claw insert (8) has an opening which is designed for the passage of the at least one clamping element (5).

2. Clawed securing means (1) according to claim 1, **characterised in that** the end region (10) of the claw insert (8) abuts on the respective clamping jaw (4a, 4b) of the same half (3a, 3b).

3. Clawed securing means (1) according to any of the preceding claims, **characterised in that** the end region (10) of the claw insert (8) is guided through a slot (11) in the strap, wherein the end region (10) of the claw insert (8) is arranged adjacent to a surface (12) of the clamping jaw (4a, 4b), which surface faces away from the oppositely-situated clamping jaw (4a, 4b).

4. Clawed securing means (1) according to any of the preceding claims, **characterised in that** the claw insert (8) has at least one intermediate segment (13) which protrudes radially to the outside through a free space (14) in the half (3a, 3b).

5. Clawed securing means (1) according to claim 4, **characterised in that** the intermediate segment (13) is formed from the claw insert (8).

6. Clawed securing means (1) according to any of claims 4 or 5, **characterised in that** the intermediate segments (13) of two claw inserts (8) on oppositely-situated axial edges (7) of a half (3a, 3b) are aligned parallel to one another.

7. Clawed securing means (1) according to any of claims 4 to 6, **characterised in that** the free space (14) in the half (3a, 3b), through which free space the intermediate segment (13) protrudes radially to the outside, has a shape corresponding to the intermediate segment (13).

8. Clawed securing means (1) according to any of the preceding claims, **characterised in that** the claw insert (8) has two rows (15) arranged parallel to one another which comprise in each case several claws (9) arranged next to one another in circumferential direction.

9. Clawed securing means (1) according to any of the preceding claims, **characterised in that** the axial edges (7) of the halves (3a, 3b) are bent radially to the inside, wherein the claw inserts (8) in the region of a bending-edge of the edges (7) abut on the radially inner surface (6) of the halves (3a, 3b).

## Revendications

1. Griffe de sécurité (1) avec une bande (2), qui présente deux moitiés (3a, 3b), qui présentent à leurs extrémités chacune une mâchoire de serrage (4a, 4b), dans laquelle des mâchoires de serrage (4a, 4b) opposées des deux moitiés (3a, 3b) sont assemblées l'une à l'autre à chaque fois par l'intermédiaire d'au moins un élément de serrage (5), et dans laquelle, sur une surface (6) radialement intérieure, au niveau de bords axiaux (7) des moitiés (3a, 3b), est agencée à chaque fois au moins une pièce intercalaire de griffe (8) sensiblement en forme de cercle partiel qui présente plusieurs griffes (9) agencées les unes à côté des autres en direction circonférentielle, dans laquelle les pièces intercalaires de griffe (8) présentent à leurs extrémités à chaque fois une zone terminale (10) qui est coudée radialement vers l'extérieur, dans laquelle la zone terminale (10) est agencée au voisinage de la mâchoire de serrage (4a, 4b) respective de la même moitié, **caractérisée en ce que** la zone terminale (10) de la pièce intercalaire de griffe (8) présente une ouverture qui est réalisée pour le passage de l'au moins un élément de serrage (5).

2. Griffe de sécurité (1) selon la revendication 1, **caractérisée en ce que** la zone terminale (10) de la pièce intercalaire de griffe (8) est adjacente à la mâchoire de serrage (4a, 4b) respective de la même moitié (3a, 3b).

3. Griffe de sécurité (1) selon l'une quelconque des revendications précédentes, **caractérisée en ce que** la zone terminale (10) de la pièce intercalaire de griffe (8) est guidée à travers une fente (11) dans la bande, dans laquelle la zone terminale (10) de la pièce intercalaire de griffe (8) est agencée au voisinage d'une surface (12) de la mâchoire de serrage (4a, 4b), qui est à l'opposé de la mâchoire de serrage (4a, 4b) opposée.

4. Griffe de sécurité (1) selon l'une quelconque des revendications précédentes, **caractérisée en ce que** la pièce intercalaire de griffe (8) présente au moins un segment intermédiaire (13) qui dépasse radialement vers l'extérieur à travers un espace libre (14) dans la moitié (3a, 3b).

5. Griffe de sécurité (1) selon la revendication 4, **caractérisée en ce que** le segment intermédiaire (13) est formé à partir de la pièce intercalaire de griffe (8).

6. Griffe de sécurité (1) selon la revendication 4 ou 5, **caractérisée en ce que** les segments intermédiaires (13) de deux pièces intercalaires de griffe (8), au niveau de bords axiaux opposés (7) d'une moitié (3a, 3b), sont orientés parallèlement l'un à l'autre.

7. Griffe de sécurité (1) selon l'une quelconque des revendications 4 à 6, **caractérisée en ce que** l'espace libre (14) dans la moitié (3a, 3b) à travers lequel dépasse radialement vers l'extérieur le segment intermédiaire (13) présente une forme correspondant au segment intermédiaire (13).

8. Griffe de sécurité (1) selon l'une quelconque des revendications précédentes, **caractérisée en ce que** la pièce intercalaire de griffe (8) présente deux rangées (15), agencées parallèlement l'une à l'autre en direction axiale, qui comprennent à chaque fois plusieurs griffes (9) agencées les unes à côté des autres en direction circonférentielle.

9. Griffe de sécurité (1) selon l'une quelconque des revendications précédentes, **caractérisée en ce que** les bords axiaux (7) des moitiés (3a, 3b) sont pliés radialement vers l'intérieur, dans laquelle les pièces intercalaires de griffe (8) dans la zone d'une arête de pliage des bords (7) sont adjacentes à la surface radialement intérieure (6) des moitiés (3a, 3b).
